# EUROPEAN PATENT APPLICATION

(11) **EP 2 476 540 A1**
(43) Date of publication of application: **18.07.2012**
(21) Application number: 11151248.9
(22) Date of filing: 18.01.2011
(51) Int. Cl.: B29C 70/26, B29C 70/54, B29D 99/00

(54) **Stiffening sheet for use in a fibre reinforced laminate, fibre reinforced laminate and wind turbine blade, and a method of manufacturing a fibre reinforced laminate**

(71) Applicant: Siemens Aktiengesellschaft, 80333 München (DE)
(72) Inventor: Noerlem, Michael, 9230, Svenstrup (DK)

(57) **Abstract**

The invention describes a stiffening sheet for use in a fibre reinforced laminate, wherein the stiffening sheet comprises reinforcing strips (25) being connected to a surface of a stiffening sheet base layer (23) made of fibre material. The invention further describes a fibre reinforced laminate and a wind turbine blade comprising such a stiffening sheet, and a method of manufacturing a fibre reinforced laminate.

## Description

The invention describes a stiffening sheet for use in a fibre reinforced laminate, a fibre reinforced laminate and a wind turbine blade comprising such a stiffening sheet, and a method of manufacturing a fibre reinforced laminate.

Wind turbine blades may be manufactured using a technique such as the closed-mould casting technique in which the entire blade can be moulded. For example, glass fibre matting can be used to build up component layers in a suitably shaped mould, and the layers of matting are bonded with a resin and cured in the mould to give a fibre reinforced polymer or glass-reinforced plastic, generally referred to simply as "fibreglass". Such a method is described in EP 1 310 351 A1.

The component layers prepared by such a closed-mould casting technique may be constituted of several tens to hundreds of layers of reinforcing mats such as glass fibre mats or layers which are bonded together by impregnating the fibre mats or layers with a resin. Alternatively, fibre reinforced laminate structures may be used as component layers to enhance the strength and stiffness of the cast part.

The structural characteristics of a fibre reinforced component layer are usually governed by the amount, type and orientation of the fibres in each layer of the laminate structure. Typically, the stiffness and strength of a component layer depends on the loading occurring in the longitudinal fibre direction. Therefore, a traditionally designed fibre reinforced component layer assumes that the fibres of the finished component layer will have the same orientation in the finished component as when placed in the mould. However, in some cases wrinkles, folds or knits in the fibre layers may form during the manufacturing process. In such cases the fibres in the wrinkles, folds, or knits no longer have the desired orientation, and severe overload of the fibre reinforced component layer may be the result.

Wrinkles, folds, or knits may form for a number of reasons. The thermal expansion of a fibre reinforced component layer during curing may exceed the thermal expansion of the mould, in which case the fibre reinforced component layer may come under compressive pressure before the matrix material, typically a thermoplastic or thermosetting material, is cured sufficiently to maintain the fibres in the desired orientation. Uneven structures underneath the fibre reinforced component layer or undulations in the surface on which the fibre reinforced component layer is built up may promote the development of wrinkles, folds, or knits.

Attempts of preventing wrinkles in fibre reinforced component layers comprise typically a combination of one or more known techniques. For example, the fibre reinforced component layer thickness is kept below certain limits in order to minimise exothermal heat generation. Moulds and other surfaces on which the fibre reinforced component layer is formed must be maintained at a high quality. Curing must be carried out at carefully controlled temperature gradients so as to minimise differences in the thermal expansion. However, these additional efforts add overall cost of manufacture.

Another method for avoiding wrinkles in fibre layers consists of including stiffening sheets between the fibre layers. The stiffening sheets are selected from materials stiffer than the fibre material. When positioned between layers of, for example, fibreglass mats, the stiffening sheets prevent wrinkles, folds, or knits forming in the fibre mat layers, because the fibre mats are kept more or less flat by the stiffening sheets.

The commonly-used stiffening sheets are a pre-cured solid sheet of a resin material, a perforated, mesh-like or any other resin-permeable sheet such as, for example, a foil made of wood or metal.

In US2005/0048260 A1 a method of fabricating a laminated composite body including a metal foil and a plurality of fibre plies is disclosed. The method includes perforating a sheet of metal foil, stacking the perforated metal foil sheet in the plurality of fibre plies in face to face relation in a predetermined order and orientation, and infusing resin into the stacked sheet and plies so that resin flows through the perforations in the metal foil sheet and intersperses between the plurality of fibre plies to form the laminate composite body. Instead of a perforated metal foil, a plurality of thin metal foil strips may be used as metal composite elements which are arranged between the fibre plies in order to make a laminate fibre-metal-composite structure of desired stiffness after resin infusion and hardening. Thereby, the metal foil strips are used to make it possible for the resin to flow through the spaces between the foil strips for wetting the fibre plies in the laminate structure.

In WO 2004/071761 A1 a laminate of at least two plates formed from aluminium alloy is disclosed, between which an intermediate layer is situated containing at least two groups of continuous, mutually parallel fibres. The intermediate layer is connected to the metal plates during resin hardening. However, this laminate cannot be prepared according to a resin infusion technique and thus results in a complicated and expensive laminate.

In WO 95/20479 A1 a method of manufacturing a composite laminate having a plurality of unidirectional oriented layers, for example layers of matrix material reinforced with unidirectional oriented fibres is disclosed. At least one inner metal layer, for example a metal layer that does not form an outer surface of the laminate, is arranged together with the other layers so as to give a balanced and symmetric laminate.

In EP 2113373 A1 a method of manufacturing a reinforced laminate is disclosed which comprises fibre material sheets. In the fibre reinforced laminate a layer is prepared which has in a first lateral direction a greater stiffness than in a second lateral direction and which has in the first lateral direction a greater stiffness than the other layers constituting the laminate. According to this document, the specific characteristic of this layer is achieved by a fibre material sheet which is partly impregnated with resin and pre-cured such that the cured resin forms spaced strips extending along the first lateral direction of this sheet.

A disadvantage of rigid or stiff sheets like the sheets and layers described in the above prior art may be that the layer cannot be shaped over a rounded or curved body.

If, however, wrinkles, folds or knits are formed in fibre reinforced component layers despite preventive action taken during manufacture, repair or rejection of the layers will usually be required, as the loss of stiffness and/or strength owing to the wrinkles, folds, or knits will often exceed any realistic safety margins or tolerances.

It is therefore an object of the present invention to provide an improved stiffening sheet for use in a fibre reinforced laminate, a fibre reinforced laminate and a wind turbine blade comprising such a stiffening sheet, as well as a method of manufacturing a fibre reinforced laminate in order to overcome the problems mentioned above.

The object of the invention is achieved by a stiffening sheet according to claim 1, and by a fibre reinforced laminate according to claim 11, and by a wind turbine blade according to claim 12, and by a method of manufacturing a fibre reinforced laminate according to claim 13.

The stiffening sheet for use in a fibre reinforced laminate comprises reinforcing strips being connected or joined to a surface of a stiffening sheet base layer made of fibre material. The favourable connection of reinforcing strips to the surface of a stiffening base layer allows a fixation of the stiffening elements, namely of the reinforcing strips, in a suitable pattern on the stiffening base layer.

Most preferably, the reinforcing strips are arranged such that they are suitably spaced from each other. In an embodiment of the invention, the reinforcing strips are arranged in a substantial parallel pattern on the surface of the base layer. Of course, they can be arranged in a bent-like form or in any other suitable curved pattern which depends on the use of the stiffening sheet in the laminate part. It might be favourable to arrange more reinforcing strips in one part of the base layer than in another part or to reduce the space between two adjacent reinforcing strips in some parts of the base layer. This allows a more simple modification of the stiffness of the stiffening sheet or of the reinforcing direction provided by the stiffening sheet.

If the stiffening elements are suitably arranged on the surface of the stiffening sheet base layer, the stiffening sheet can be favourably used in a method of manufacturing a fibre reinforced laminate. The stiffening sheet is favourable in preventing underlying fibre mats or fibre reinforced layers from forming wrinkles, folds, or knits during the manufacturing process of a composite fibre reinforced laminate product. Compared to the relative rigid stiffening sheets commonly used, the stiffening sheet of the invention can easily be shaped and draped over a rounded or curved body due to the flexibility of the stiffening element pattern and the direct connection of the stiffening elements to the base layer. In case the reinforcing strips would not be suitably connected or joined to the base layer, but would be placed without any fixation to the underlying fibre mats, the stiffening effect or the so called wrinkle-preventive effect would not easily be maintained during the manufacturing process, especially during the infusion of a resin into the fibre reinforced layers. This is because the stiffening elements can easily be displaced if there is no connection to the fibre mats or if they are not directly connected to or spaced apart from each other.

In the fibre reinforced laminate of the invention, which is composed of a layer stack of alternate layers of fibre material and stiffening sheets according to the invention, the formation of wrinkles, folds, or knits is favourably prevented during the manufacturing process. Thus, the stiffness and/or the strength of the fibre reinforced laminate can be improved because of the wrinkle preventive effect of the stiffening sheet comprised. In the context of the present invention, the terms "layer stack of alternate layers" is intended to include also layer stacks or laminate stacks in which two or more fibre material sheets such as fibre mats or fibre plies may be adjacent to each other before the next stiffening sheet is arranged thereon as long as at least two different layers are stacked on each other in such a laminate. Alternatively, two or more stiffening sheets may be adjacent to each other followed by one or more fibre material sheets. For the invention it is favourable that stiffening sheets are arranged within fibre material sheets in substantially alternating order to provide the wrinkle-preventing effect of the stiffening sheets to the fibre material sheets.

A wind turbine blade according to the invention comprises a stiffening sheet or preferably a fibre reinforced laminate of the invention and, thus, has an improved stiffness and strength due to the respective wrinkle-preventive effect of the stiffening sheet comprised or used.

In the method of manufacturing a fibre reinforced laminate according to the invention, a stiffening sheet of the invention is arranged onto a fibre material layer. The use of a stiffening sheet comprising reinforcing strips, which are connected or joined to a surface of a stiffening sheet base layer made of fibre material, prevents the underlying fibre mats from wrinkling, folding, or knitting during the process steps of assembling a layer stack, infusing and curing a resin. Curing means in the context of the invention a self-hardening process or a curing of the resin by means of heating.

The stiffening sheet according to the invention is responsible for an improved wrinkle-preventive action compared to common stiffening sheets like metal plates arranged onto fibre mats without any connection to a respective base layer, especially in the status where the resin is not cured. Moreover, the reinforcing strips used as wrinkle-preventive elements can be arranged in any suitable shape depending on the form of the laminate to be produced or the mould used in the manufacturing method. As they are connected or joined to the base layer of the stiffening sheet, the reinforcing strips are substantially fixed in their position onto the surface of the base layer and, thus, also in the laminate stack even though the resin in the laminate is not yet cured.

Particularly advantageous embodiments and features of the invention are given by the dependent claims, as revealed in the following description. Features of the embodiments may be combined as desired to arrive at further embodiments.

The stiffening sheet according to the invention can, in an embodiment of the invention, comprise at least one reinforcing strip which is bonded to the stiffening sheet base layer. Bonding in the context of the invention means that the reinforcing strip is rigidly fixed or joined to the base layer by a suitable temporarily or permanent bonding means. For example, the reinforcing strip may be bonded in a strip-like pattern to the stiffening sheet base layer. Such a strip-like pattern may be formed by providing a strip of a bonding agent like glue onto the surface of the base layer and then pressing the reinforcing strip into the bonding agent. Suitable is that at least one of the reinforcing strips of a stiffening sheet is bonded to the base layer in this manner, while other reinforcing strips of this stiffening sheet may be connected in a different manner to the base layer. For example, only the reinforcing strips in the middle of a stiffening sheet are bonded while the reinforcing strips at the outer sides of the stiffening sheets are connected in a different manner, for example by one of the exemplified connecting means as explained hereafter. Of course it is also within the invention that all reinforcing trips are bonded to the surface of the base layer.

In another embodiment, it is also possible that the reinforcing strips are joined to the base layer in a strip-like pattern by any connecting means as described in one of the following embodiments or examples.

In an embodiment, at least one of the reinforcing strips may be connected or joined to the stiffening sheet base layer at single attachment points. As exemplary attachment points can be mentioned an adhesive attachment point, a resin attachment point, or a clamp attachment point. In an alternative, at least one of the reinforcing strips can be stitched or sewn to the stiffening sheet base layer, thus forming single attachment points.

If a reinforcing strip is connected at least in single attachment points as described beforehand, the other parts of the reinforcing strip, that means the parts of the strips lying between the single attachment points, may not fixed to the base layer. In this case, the stiffening sheet will be provided with some flexibility also in the longitudinal direction of the reinforcing strip. Thereby, the reinforcing strips may be adjusted to a bent-like or curved form or shape of the laminate and/or mould.

According to an embodiment, the stiffening sheet of the invention can comprise at least one reinforcing strip, which is connected to the base layer such that the reinforcing strip is movable in its longitudinal direction. In the context of the present invention, the term "being movable in its longitudinal direction" means that the reinforcing strip is connected to the stiffening sheet base material layer such that it is substantially fixed in its lateral direction, but can be slightly moved within its longitudinal direction. For example, the reinforcing strip is arranged on the surface of the base layer and is connected at single attachment points such that it can be moved in its longitudinal direction only. Thus, the stiffening sheet can be provided with a suitable flexibility also in the longitudinal direction of the reinforcing strips because at least one of the reinforcing strips is fixed only in the lateral direction to the base layer, but not in its longitudinal direction. This is favourable because it is then easier to place the stiffening sheet over a curved surface of fibre mats or a rounded shape of the laminate stack without influencing the wrinkle-preventive effect of the stiffening sheet.

In a further preferred embodiment, at least one reinforcing strip or any of the reinforcing strips of the stiffening sheet of the invention can be guided through guiding means, such as strips or pockets, which are provided on the stiffening sheet base layer. Alternatively, the guiding means can be formed by means of the base layer material itself, for example by providing several holes in the base layer, through which the reinforcing strips are pushed such that the base layer is provided in some parts on top of the strip and in other parts below the strip. Thereby, the reinforcing strip is fixed in lateral direction by means of the holes as guiding means, but is movable in longitudinal direction of the strip.

Similar to the previous arrangement of the reinforcing strips, the reinforcing strip guided by a guiding means provides a sufficient flexibility in longitudinal direction to the stiffening sheet, while fixing the reinforcing strips to the base layer in the lateral direction. Thus, an improved adjustment to a curved or rounded shape of the laminate stack is possible while the wrinkle-preventing effect is maintained.

Generally, a reinforcing strip may in the context of the invention be any stiffening element which is suitable for providing a desired stiffness or rigidity in the reinforcing direction of the stiffening sheet. As exemplary embodiments of the reinforcing strips for the use in the stiffening sheet of the present invention can be mentioned thin rods which are, preferably, composed of an essentially rigid material. Thin rods having a sufficient stiffness and strength in longitudinal direction while providing enough flexibility to the stiffening sheet in their lateral direction can have any cross section as long as they provide a sufficient stiffness and strength. As exemplary materials of the reinforcing strips any materials providing a sufficient stiffness in longitudinal direction of the strips can be mentioned. The material preferably comprises wood and/or a metal and/or glass fibres and/or a resin.

The reinforcing strips may have an essentially rounded or oval cross section such as in rods, but they can also be flat strips if the material is a very stiff material. Relative flat strips may be favourable because they would not result in too big holes or spaces between the base layer and the next fibre material layer of the laminate. It is also preferred that the reinforcing strips or slender rods have a length substantially identical to the stiffening sheet used. Of course if the finished product is a blade of a wind rotor, view stiffening sheets usually have to be lied in consecutive order. In this case, it is favourable to overlie the adjacent stiffening sheets in such a manner that the reinforcing strips are arranged not in line with each other but in an interlocked manner.

The reinforcing strips or slender rods can favourably have a width or diameter of in the range of about 0.01 to 2 cm, more preferably between 0.02 to 0.5 cm, and usually about 0.15 cm.

The spaces between two adjacent reinforcing strips are within a range of about 10 or 500 times the diameter or width of the strips, and preferably the spaces are in the range of about 1 cm to 15 cm, more preferably about 5 cm.

The fibre reinforced laminate according to the invention which is composed of a layer stack of alternate layers of fibre material and stiffening sheets can comprise any of the afore mentioned stiffening sheets of the invention to be provided with a sufficient stiffness and strength.

The wind turbine blade according to the invention comprises a stiffening sheet according to the invention and preferably a fibre reinforced laminate of the invention having a sufficient stiffness and strength due to the wrinkle-preventing effect of the stiffening sheet.

The method of manufacturing a fibre reinforced laminate comprises the step of arranging a stiffening sheet of the invention onto a fibre material layer. The use of the stiffening sheet comprising reinforcing strips being connected or joined to a surface of a stiffening sheet base layer made of fibre material facilitates not only the process of assembling the laminate stack but also widens the spectrum of shapes produced in a reliable manner without or with a reduced formation of wrinkles, folds, or knits during the manufacturing process. Especially, in a favourable embodiment of the method of the invention, at least two stiffening sheets are used in the laminate, wherein they are arranged in such a manner that the reinforcing direction of a first stiffening sheet is in a substantial transversal direction, preferably in an angle of 60° to 120°, or more preferably in an angle of 90° to the reinforcing direction of a second stiffening sheet. Thereby, the stiffness and the strength of the finished laminate can be improved in more than one direction because of the different reinforcing directions of the reinforcing strips in the at least two stiffening sheets of the laminate stack.

In a further embodiment of the method of the invention, the method comprises the steps of:
a) building up a fibre material layer of the laminate by stacking one or more sheets of fibre material in a mould,
b) arranging a previously manufactured stiffening sheet of the invention on top of the fibre material layer, and
c) optionally repeating steps a) and/or b) to obtain a desired combined thickness of the laminate.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 schematically shows a section through a laminated wind turbine blade;
Fig. 2 schematically shows a detail of Figure 1;
Fig. 3 schematically shows a first stage in the process of producing a wind turbine blade according to Figure 1;
Fig. 4 shows a second stage in the process of producing a wind turbine blade according to Figure 1;
Fig. 5 shows a third stage in the process of producing a wind turbine blade according to Figure 1;
Fig. 6 schematically shows a part of an embodiment of a stiffening sheet of the invention in a perspective view having substantially parallel reinforcing strips on the surface of the stiffening sheet base layer;
Fig. 7 schematically shows a part of a further embodiment of a stiffening sheet of the invention in a perspective view having curved reinforcing strips on the surface of the stiffening sheet base layer.

In the drawings, like reference numbers refer to like objects throughout. Objects in the diagrams are not necessarily drawn to scale.

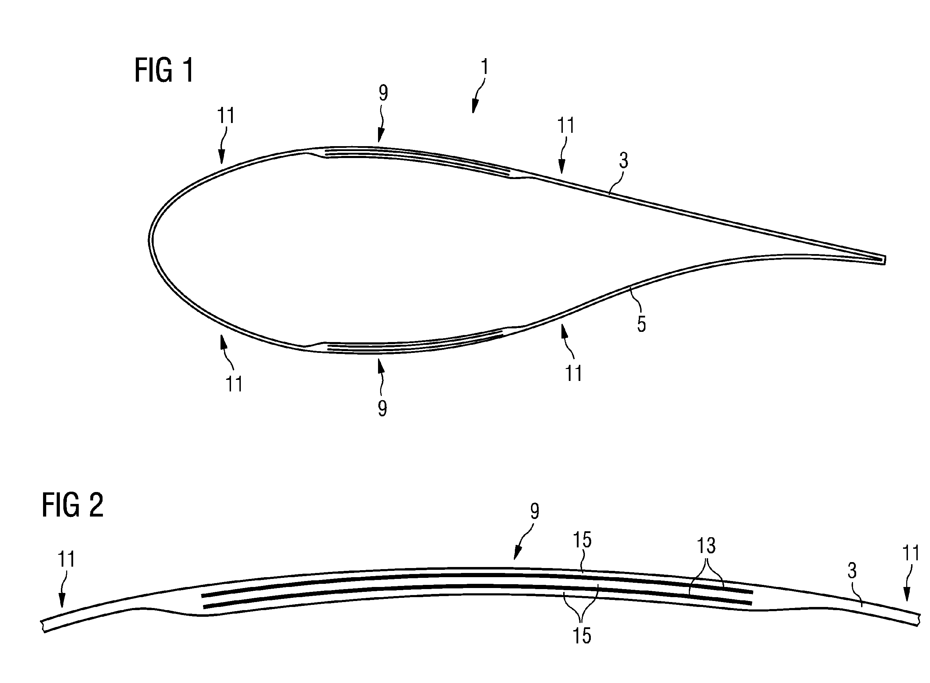

An embodiment of the present invention will now be described with reference to Figures 1 to 6. Figure 1 is a schematic view of the cross-section of a laminated wind turbine blade 1 made using the method according to the invention. The wind turbine blade 1 is made of an upper half 3 and a lower half 5 each comprising a thickened section 9 and non-thickened sections 11. The upper and lower halves 3, 5 comprise a number of fibre reinforced layers which are not individually shown in the figure. In the thickened section 9 the number of fibre reinforced layers is increased with respect to the non-thickened sections 11.

The thickened section 9 of the upper half 3 is shown in more detail in Figure 2. In the thickened section 9, stiffening sheets 13 according to the invention are used to prevent wrinkles, folds or knits in the underlying layers of fibre material 15 (in the following also called fibre material layers). The stiffening sheets 13 are stiffer in a reinforcing direction than in a perpendicular direction and are stiffer than the fibre material layers 15 or, if present, additional layers (not shown in the Figure) constituting the laminate due to its specific construction with longitudinal arranged reinforcing strips. The stiffening sheets are arranged between the fibre material layers 15 which build up the fibre reinforced layers in the finished product after hardening.

Additional layers may also be present in the stack of layers 13, 15. Such additional layers may, for example, be finishing layers for providing a smoother surface or layers improving the demoulding properties.

For various aspects of the invention, the stiffening sheets 13 may alternatively be integrated in the blade halves 3, 5 at the said non-thickened sections 11 or in a combination of the thickened sections 9 and the non-thickened sections 11.

The fibre material layers 15 as well as the stiffening sheets 13 can be embedded in a resin matrix which can be formed by resin infusion and subsequent hardening or curing of the resin. During the infusion and curing process, the stiffening sheets 13 prevent the formation of wrinkles, folds, and knits in the fibre material layers 15 since the greater stiffness of the stiffening sheets 13 does not allow the fibre material layers 15 to wrinkle or fold or knitting substantially. The reason is that the fibre material layers are sandwiched between the mould and a stiffening sheet 13 or between two stiffening sheets 13.

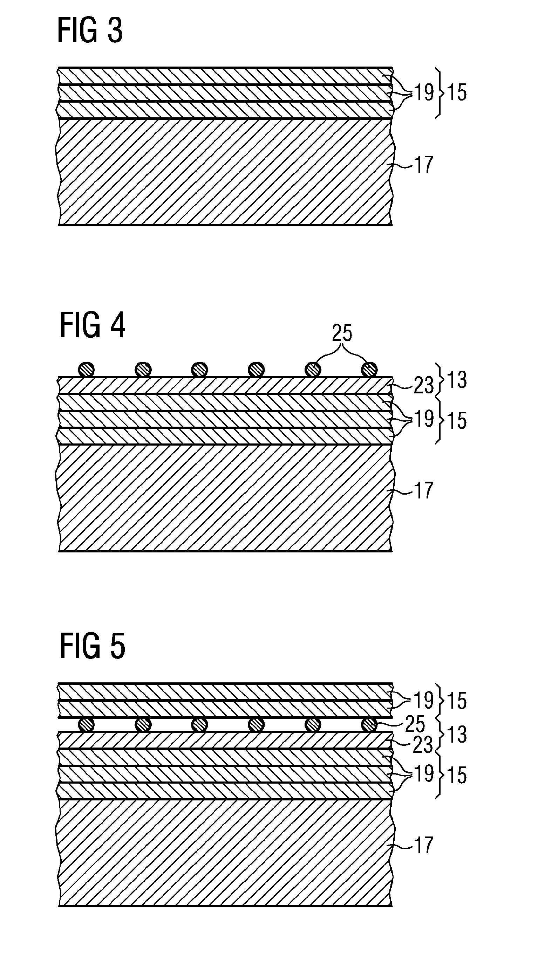

The method of forming the wind turbine blade 1 shown in Figures 1 and 2 will now be described with respect to Figures 3 to 5.

In general, the upper and lower halves 3, 5 of the wind turbine blade 1 can be produced by placing dry fibre mats 19 on top of each other in a mould 17 to form a fibre material layer 15, wetting the fibre mats 19 by means of a resin infusion and subsequently curing the resin. Thereby a fibre reinforced laminate structure can be produced in an easy way and with low costs because the infusion with the resin can be made in one step and does not need to be made before lying each fibre mat into the mould or into the stack of fibre mats. Although described with respect to producing a wind turbine blade 1, the method which is described with respect to Figures 3 to 5 is not limited to wind turbine blade production, but can also be used for producing other fibre reinforced laminated structures, e.g. in boat construction or automobile building or the building industry.

A first stage of the method for manufacturing the wind turbine blade 1 is shown in Figure 3. Figure 3 schematically shows a cut-out sectional view of the mould 17 and a number of fibre mats 19 forming the fibre material layer 15, e.g. glass fibre mats, carbon fibre mats or aramid fibre mats, which are placed in the mould 17 on top of each other to form a stack of the fibre mats 19. The fibre mats can be in a dry state and do not need to be resin impregnated when being placed into the mould 17. This significantly facilitates the stacking of the fibre material layers and lowers the costs for producing reliable fibre reinforced laminated products. For sake of simplicity, the fibre mats 19 and the fibre material layers 15 are shown as flat layers. Alternatively, they can cover rounded or curved layers as it is shown, for example, in Figure 1. The shape mainly depends on the form and shape as well as the function of the finished product.

After a thus formed fibre material layer 15 comprised of fibre mats 19 has been placed into the mould 17 a stiffening sheet 13 is placed on top of the stack of fibre mats 19 (see Figure 4).

After the stiffening sheet 13 has been placed on top of the first fibre material layer 15, another fibre material layer 15, here comprising a number of fibre mats 19, is placed on top of the stiffening sheet 13, as shown in Figure 5.

Alternate layer stacks of fibre material layers 15 and stiffening sheets 13 can be continued until the desired overall thickness is reached. The number of fibre mats 19 stacked in a fibre material layer 15 is essentially unlimited and has no effect on the wrinkle-preventing effect of the stiffening sheet 13

Although not shown in Figures 3 to 5, one or more additional stiffening sheets 13 may be present under the lowermost stack of fibre mats 19 constituting the lowermost fibre material layer 15. In this case, a stiffening sheet 13 would be the first layer placed in the mould 17, wherein the reinforcing strips preferably face into the stacked layers. In this case, the outer surface of the laminate product is then composed of the stiffening sheet base layer in order to have a substantially even outer surface. The outermost layer of the overall stack consisting of stacks of fibre material layers 15 alternating with stiffening sheets 13 may also be at least one stiffening sheet 13. Here also, the reinforcing strips preferably face into the stacked layers in order to form an essentially even outer surface composed of the stiffening sheet base layer.

After the layering of the fibre material layers 15 and the stiffening sheets 13 in a non-impregnated or dry state (as shown in Figure 5), the mould 17 is closed and a vacuum is applied to the mould 17 (not shown in the Figures). Then, a thermoplastic or thermosetting material such as, e.g. a polyester resin, an epoxy resin, or an aramid resin, is infused into the evacuated mould 17. The resin permeates through the fibre material layers 15 and the stiffening sheets 13, thereby wetting or impregnating the fibre mats of the fibre material. After a while all fibre material layers 15 and also all stiffening sheets 13 are sufficiently wetted. In the next step, the resin is hardened or cured with or without external heating. Alternatively, polymerisation initiators can be sued to start or speed up the hardening or curing process. After curing the resin, the mould 17 is dismantled.

During the curing process the stiffening sheets 13 prevent the fibre material layers 15 from forming wrinkles, i.e. from folding up in a direction substantially perpendicular to the extension of the fibres in the fibre mats 19. The reason is that the stiffening sheet 13 has a higher stiffness than the fibre material layer 15 so that they do not fold themselves. Since the stiffening sheet 13 is provided with reinforcing strips 25 substantially extending in one direction, the stiffening sheet 13 has a greater stiffness in the reinforcing direction than in the direction perpendicular thereto. Therefore, the reinforcing strips 25 of the stiffening sheet 13 are preferably placed substantially perpendicular to the fibre extension in the underlying fibre material layer 15.

As the laminate comprises stiffening sheets 13 arranged within the stack of the fibre material layers 15, there is no or only minimal space available for the formation of wrinkles between the mould 17 and the first stiffening sheet 13 or between two stiffening sheets 13. Moreover, even if small wrinkles would occur in a fibre reinforced layer 15 sandwiched between the mould 17 and a stiffening sheet 13 or between two stiffening sheets 13 such wrinkles would be confined to this particular stack of fibre mats in a fibre material layer 15 by the stiffening sheet 13. Especially, the propagation of wrinkles or folds through the total laminate would be prevented by the one or more stiffening sheets 13 and the defects in the finished product can be minimized. Hence, the quality of the product can be improved by the use of the stiffening sheets of the invention in a fibre reinforced laminate or in the method of the present invention.

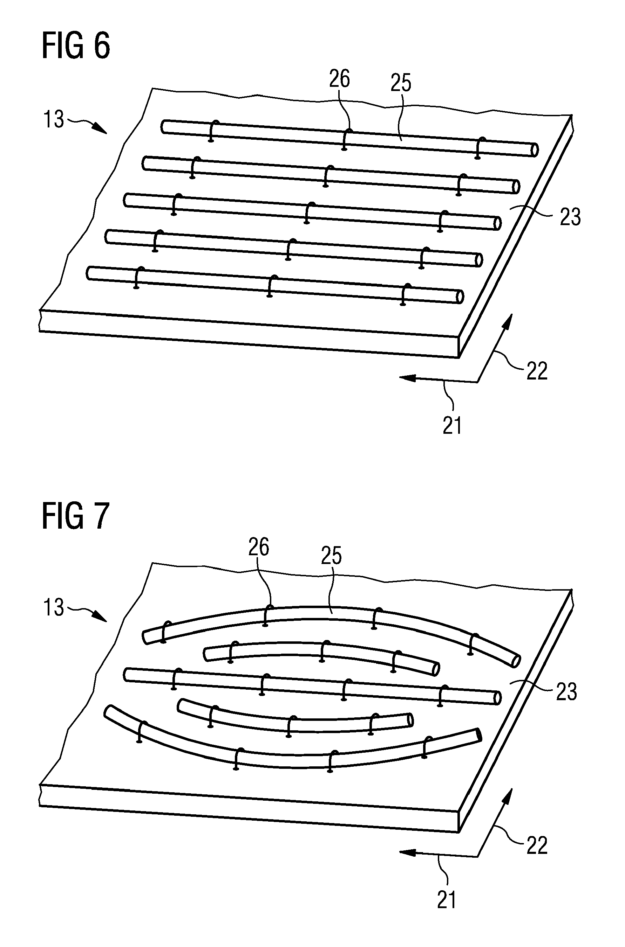

Figure 6 schematically shows, in a perspective view, a part of a stiffening sheet 13 according to the present invention. The stiffening sheet 13 generally is comprised of a substantially flat base layer 23, preferably in sheet form, which is made of fibre material. The stiffening sheet 13 can, similar to the fibre material layers 15, be consisted of one or more layers of fibre material placed on top of each other (not shown in the Figure). On the top of the fibre material base layer 23, one or more reinforcing strips 25, here in the form of so called slender rods, are provided. The reinforcing strips 25 of each of the stiffening sheets extend in a substantially parallel direction 21 and are spaced apart in a perpendicular direction 22. This causes a greater stiffness of the whole stiffening sheet 13, especially in the direction of the reinforcing strips 25, which is the reinforcing direction 21, than in the perpendicular direction 22 in Figure 6. Therefore, the stiffening sheet 13 is favourably stiff in the reinforcing direction 21 and flexible in the direction 22. This means that the material is easy to drape into a mould due to the flexibility while sufficiently preventing wrinkles in the fibre material layer(s) 15 adjacent to the stiffening sheet.

As it is shown in Fig. 6, the base layer 23 made of fibre material is at least partly attached to the one or more reinforcing strips 25, here in the form of slender rods, at several attachment points 26. In this embodiment, the slender rods are stitched or sewn to the fibre material of the base layer at the attachment points 26 using a suitable sewing fibre or thread. Dependent on the material of the fibre material layer, flexible glass, carbon or aramid fibres could be used as sewing fibres or threads.

In this way, the base layer 23 is reinforced with the reinforcing strips 25 such that the desired stiffness of the stiffening sheet can suitably be provided in the reinforcing direction 21. The reinforcing strips 25 as used in this embodiment are made of pultruded glass fibres because of the similarity of the materials used. In this case, the fibre material of the base layer 23, the reinforcing strips 25 and the sewing material 26 are made of glass fibre materials in different forms. This is preferred because after the resin has cured, the similarity of the materials used effectively prevents delamination effects in the cured product.

In the embodiment shown in Figure 7, the stiffening sheet is provided with curved reinforcing strips 25 on the surface of the stiffening sheet base layer 23. In this case, the stiffening sheet can have different reinforcing abilities in one part of the sheet than in the other parts of the sheet. As it is shown in Figure 7, the reinforcing strips 25 are spaced wider apart in the middle of the stiffening sheet than at parts shown at the left and right side. That means that the stiffening effect is improved in the middle of this stiffening sheet, while it is more flexible at its outer side. Such a pattern of reinforcing strips 25 on a base layer of a stiffening sheet may be suitably used in laminates having a curved or bent shape like a blade of a wind turbine.

Although the present invention has been disclosed in the form of preferred embodiments and variations thereof, it will be understood that numerous additional modifications and variations could be made thereto without departing from the scope of the invention. For example, instead of sewing the reinforcing strips to the fibre material layer a cold or hotmelt adhesive, a resin, or a clamp could be used to attach the strips to the base layer at distinctive attachment points. In addition, if the stiffness of the reinforcing strips made of glass fibres shall be suitably adjusted to the application of the laminate, suitable materials such as wood, metal, carbon or aramide fibres, cured resins or a composite of these materials could be used in alternative embodiments of the invention.

For the sake of clarity, it is to be understood that the use of "a" or "an" throughout this application does not exclude a plurality, and "comprising" does not exclude other steps or elements. A "means" or "layer" can comprise a number of means or layers, unless otherwise stated.

## Claims

1. A stiffening sheet for use in a fibre reinforced laminate, wherein the stiffening sheet comprises reinforcing strips (25) being connected to a surface of a stiffening sheet base layer (23) made of fibre material.

2. The stiffening sheet according to claim 1, wherein at least one of the reinforcing strips (25) is bonded to the stiffening sheet base layer (23).

3. The stiffening sheet according to claim 1 or 2, wherein at least one of the reinforcing strips (25) is connected to the stiffening sheet base layer (23) in a strip-like pattern.

4. The stiffening sheet according to any one of claims 1 to 3, wherein at least one of the reinforcing strips (25) is connected to the stiffening sheet base layer (23) at single attachment points (26).

5. The stiffening sheet according to claim 4, wherein at least one of the attachment points is an adhesive attachment point, a resin attachment point, or a clamp attachment point.

6. The stiffening sheet according to any one of claims 1 to 5, wherein at least one of the reinforcing strips (25) is stitched and/or sewn to the stiffening sheet base layer (23).

7. The stiffening sheet according to any one of the claims 1 to 6, wherein at least one of the reinforcing strips (25) is connected such that the reinforcing strip (25) is movable in its longitudinal direction.

8. The stiffening sheet according to any one of claims 1 to 7, wherein at least one of the reinforcing strips (25) is guided through a guiding element provided on the stiffening sheet base layer (23).

9. The stiffening sheet according to any one of claims 1 to 8, wherein the reinforcing strips (25) are thin rods and are, preferably, composed of an essentially rigid material.

10. The stiffening sheet according to any one of claims 1 to 9, wherein the material of the reinforcing strips (25) comprises wood and/or a metal and/or glass fibres and/or a resin.

11. A fibre reinforced laminate composed of a layer stack of alternate layers of fibre material (15) and stiffening sheets (13) according to any one of claims 1 to 10.

12. A wind turbine blade comprising a stiffening sheet according to any one of claims 1 to 10 and, preferably, a fibre reinforced laminate according to claim 11.

13. A method of manufacturing a fibre reinforced laminate by arranging a stiffening sheet (13) onto a fibre material layer (15), wherein the stiffening sheet (13) comprises reinforcing strips (25) being connected to a surface of a stiffening sheet base layer (23) made of fibre material.

14. The method according to claim 13, comprising the use of at least two stiffening sheets (13) in the laminate, wherein the reinforcing direction (21) of a first stiffening sheet (13) is arranged in a substantial transversal direction, preferably in an angle of 60° to 120°, or more preferably in an angle of 90° to the reinforcing direction (21) of a second stiffening sheet (13).

15. The method according to claim 13 or 14, comprising the steps of:
a) building up a fibre material layer (15) of the laminate by stacking one or more sheets of fibre material (19) in a mould,
b) arranging a previously manufactured stiffening sheet (13) on top of the fibre material layer (15), and
c) optionally repeating steps a) and/or b) to obtain a desired combined thickness of the laminate.
